# EUROPÄISCHE PATENTSCHRIFT

(11) **EP 2 667 756 B1**
(45) Veröffentlichungstag und Bekanntmachung des Hinweises auf die Patenterteilung: **18.02.2015**
(21) Anmeldenummer: 12702422.2
(22) Anmeldetag: 24.01.2012
(51) Int. Cl.: A47J 31/20

(54) **HEISSGETRÄNKEZUBEREITER**
HOT BEVERAGE PREPARATION DEVICE
DISPOSITIF DE PRÉPARATION DE BOISSONS CHAUDES

(30) Priorität: 26.01.2011 DE 102011009429
(43) Veröffentlichungstag der Anmeldung: 04.12.2013
(73) Patentinhaber: Issar, Ravinder, 73730 Esslingen (DE)
(72) Erfinder: Issar, Ravinder, 73730 Esslingen (DE)
(74) Vertreter: Kocher, Mark Werner
(86) Internationale Anmeldenummer: PCT/EP2012/000298
(87) Internationale Veröffentlichungsnummer: WO 2012/100934

(56) Entgegenhaltungen:
- WO-A1-02/43540
- WO-A1-94/05191
- WO-A1-99/34716
- DE-A1- 10 034 720
- DE-A1- 10 111 652

## Beschreibung

Die Erfindung betrifft einen Heißgetränkezubereiter für den Haushalts- oder Gastronomiebedarf, mit einer Heizungseinrichtung für die Flüssigkeit, einer Steuerungseinrichtung zur Ansteuerung der Heizungseinrichtung und einem Getränkebehälter, der zur Aufnahme von erhitzter Flüssigkeit ausgebildet ist, wobei im Getränkebehälter eine Rühreinrichtung angeordnet ist, die für eine Rührbewegung der erhitzten Flüssigkeit ausgebildet ist, um eine homogene Verteilung eines in die erhitzte Flüssigkeit einbringbaren Getränkesubstrats zu ermöglichen, wobei die Rühreinrichtung eine Filtereinrichtung für eine Aufnahme des Getränkesubstrats umfasst.

Aus der DE 20 2006 016 849 U1 ist eine Teemaschine zum Zubereiten von Tee bekannt, die einen Vorratsbehälter für Teeblätter, eine Portioniereinrichtung für die Teeblätter, ein Heizelement zum Erwärmen von Wasser sowie ein Gefäß zur Aufnahme der portionierten Teeblätter und des Wassers umfasst.

Aus der WO 94/05191 ist ein eine Filtereinrichtung zur Zubereitung von Kaffee- oder Teegetränken in einem Flüssigkeit aufnehmenden Behälter bekannt, wobei die in die Flüssigkeit eintauchende Filtereinrichtung eine Filterkapsel zur Aufnahme von Filtergut aufweist und die Filterkapsel mit dem darin aufgenommenen Filtergut rotierend antreibbar ausgebildet sein kann.

Die WO 99/34716 offenbart eine Teemaschine hervor, bei der eine Magnetrühreinrichtung und eine Heizeinrichtung vorgesehen sind, wobei durch die Magnetrühreinrichtung eine Wasserströmung bewirkt werden kann, die die Teebrühzeit minimiert.

Die in der WO 02/43540 A1 offenbarte automatische Teemaschine basiert darauf, dass heißes Wasser über eine Rohrleitung in das Gefäß eingeleitet wird, in dem die Teezubereitung stattfinden soll. Eine aktive Erwärmung dieses Gefäßes ist bei dieser Teemaschine nicht vorgesehen.

Aus der DE 101 11 652 A1 ist eine Maschine zur Getränkezubereitung bekannt, die weitgehend einer konventionellen Kaffeemaschine mit Brühfilteranordnung ähnelt, wobei der Kaffeefilter beweglich im Behälter, angeordnet ist und von einem Benutzer zur Beendigung des Brühvorgangs nach unten gepresst wird, um das in der Flüssigkeit verteilte Kaffeepulver am Bodenbereich des Behälters zu konzentrieren.

Die DE 100 34 720 A1 offenbart eine Maschine zur Bereitung eines Mokka-Getränks, bei der ein Zubereitungsbehälter mit Hilfe einer Liftvorrichtung aus einem Zugriffsbereich eines Bedieners entfernt werden kann, um abseits dieses Zugriffsbereichs die Getränkezubereitung durchzuführen. Dabei wird in einem Zubereitungsbehälter aufgenommene Flüssigkeit mit Hilfe eines Heizkörpers erwärmt und eine Temperatur der Flüssigkeit mit einem Temperaturfühler erfasst. Ferner ist auch vorgesehen, die Flüssigkeit mit einer Rühreinrichtung umzurühren.

Die Aufgabe der Erfindung besteht darin, einen Heißgetränkezubereiter bereitzustellen, der eine vereinfachte Getränkezubereitung ermöglicht.

Diese Aufgabe wird für einen Heißgetränkezubereiter der eingangs genannten Art mit den Merkmalen des Anspruchs 1 gelöst. Hierbei ist vorgesehen, dass ein Füllstandssensor für eine Füllstandsüberwachung des Getränkebehälters vorgesehen und mit der Steuerungseinrichtung verbunden ist, um eine Wärmezufuhr in den Getränkebehälter und/oder eine Rührgeschwindigkeit der Rühreinrichtung zu steuern und wobei die Steuerungseinrichtung derart eingerichtet ist, dass die Erwärmung der Flüssigkeit im Getränkebehälter anhand eines vorgebbaren Temperaturprofils erfolgt und dass der Betrieb der Rühreinrichtung in Abhängigkeit von einem Füllstand der Flüssigkeit erfolgt.

Mit Hilfe der Rühreinrichtung, die eine Filtereinrichtung für eine Aufnahme des Getränkesubstrats umfasst, wird das Getränkesubstrat, bei dem es sich beispielsweise um Teeblätter und/oder Kaffemehl und/oder Gewürze und/oder Kakao und/oder Zucker handeln kann, in einen besonders intensiven Austausch mit der im Getränkebehälter aufgenommenen Flüssigkeit gebracht, so dass gegebenenfalls eine schnellere Zubereitung des Heißgetränks erreicht werden kann und/oder eine geringere Menge an Getränkesubstrat zur Erzielung der gewünschten Geschmacksintensität verglichen mit der konventionellen Heißgetränkezubereitung ausreichend sein kann.

Zudem kann die Rührbewegung und damit auch die Relativbewegung zwischen dem in der Filtereinrichtung aufgenommenen Getränkesubstrat und der Flüssigkeit je nach gewählter Relativgeschwindigkeit zwischen der Rühreinrichtung und der Flüssigkeit entweder dazu eingesetzt werden, ein unerwünschtes Aufschäumen der erhitzten Flüssigkeit zu vermindern oder zu verhindern oder alternativ bei geeigneten Flüssigkeiten auch ein eventuell gewünschtes Aufschäumen der Flüssigkeit zu bewirken. Ein weiterer Effekt der Rühreinrichtung kann darin bestehen, dass die Flüssigkeit im Bereich des Bodens des Getränkebehälters, der je nach Ausbildung der Heizungseinrichtung für eine Wärmeübertragung in die Flüssigkeit dient, eine lokale Überhitzung der Flüssigkeit vermieden wird. Eine solche lokale Überhitzung kann einerseits zu einer Beeinträchtigung des Geschmacks des erzeugten Heißgetränks führen, andererseits kann hierdurch ein unerwünschtes Anhaften oder Anbrennen der Flüssigkeit am Boden des Getränkebehälters auftreten. Beide Effekte werden durch die Rühreinrichtung zumindest vermindert oder sogar gänzlich verhindert.

Vorteilhafte Weiterbildungen der Erfindung sind Gegenstand der Unteransprüche.

Zweckmäßig ist es, wenn die Rühreinrichtung eine außerhalb des Getränkebehälters angeordnete und mit der Steuerungseinrichtung gekoppelte Antriebseinrichtung umfasst. Vorzugsweise ist die Antriebseinrichtung als elektrischer Motor ausgebildet, der von der Steuerungseinrichtung mit elektrischer Energie versorgt wird.

Die Versorgung der Antriebseinrichtung mit elektrischer Energie erfolgt vorzugsweise in Abhängigkeit von anderen in der Steuerungseinrichtung ablaufenden Steuerungs- oder Regelungsvorgängen, insbesondere in Abhängigkeit von der Ansteuerung der Heizungseinrichtung durch die Steuerungseinrichtung. Die Antriebseinrichtung kann für eine direkte Einkopplung einer einzigen Rotationsbewegung auf ein Rührmittel ausgebildet sein. Durch Zwischenschaltung eines Getriebes kann auch eine Überlagerung mehrerer Rotationsbewegungen um zueinander koaxiale oder zueinander winklig ausgerichtete Dreh- und /oder Schwenkachsen vorgesehen sein. Alternativ ist die Antriebseinrichtung für die Bereitstellung einer linearen Bewegung oder für eine Überlagerung zwischen einer linearen und einer rotatorischen Bewegung ausgebildet.

Bei einer weiterbildung der Erfindung ist vorgesehen, dass die Rühreinrichtung einen mit der Antriebseinrichtung verbundenen, teleskopierbaren Schaftabschnitt umfasst, der für eine Höhenverstellung eines im Getränkebehälter anordenbaren Rührmittels ausgebildet ist. Hierdurch kann das Rührmittel, das mit der Antriebseinrichtung gekoppelt ist und von dieser in die Rührbewegung versetzt wird, beispielsweise zwischen einer tief in das vom Getränkebehälter begrenzte Behältervolumen eingetauchten Funktionsposition und einer aus dem Behältervolumen entfernten Ruheposition verschoben werden. In der Funktionsposition ist ein effektiver Rührvorgang für die Flüssigkeit im Getränkebehälter gewährleistet, in der Ruheposition kann der Getränkebehälter in einfacher Weise aus dem Heißgetränkezubereiter entnommen werden, beispielsweise um das erzeugte Heißgetränk zu servieren oder den Getränkebehälter zu reinigen.

Vorteilhaft ist es, wenn die Rühreinrichtung eine Kupplungseinrichtung umfasst, die für eine berührungslose Kraftübertragung zwischen der Antriebseinrichtung und einem im Getränkebehälter anordenbaren Rührmittel ausgebildet ist. Dadurch kann der Getränkebehälter aus dem Heißgetränkezubereiter entnommen werden, ohne dass zunächst die Rühreinrichtung aus einer Funktionsstellung in eine Ruhestellung gebracht werden muss. Bevorzugt ist die Kupplungseinrichtung als magnetische Kupplung ausgebildet, beispielsweise in Form eines ersten Permanentmagneten, der von der Antriebseinrichtung in Bewegung versetzt wird und eines zweiten Permanentmagneten, der Bestandteil des Rührmittels ist und der der Bewegung des ersten Permanentmagneten folgt. Besonders bevorzugt ist die Antriebseinrichtung in einem Bereich unterhalb des Bodens des Getränkebehälters angeordnet und die Permanentmagnete sind derart aufeinander abgestimmt, dass die magnetische Kopplung zwischen Antriebseinrichtung und Rührmittel auch durch den Boden des Getränkebehälters hindurch gewährleistet ist. vorteilhaft hierbei ist es, wenn der Getränkebehälter aus einem nichtmagnetisierbaren Material, insbesondere aus Glas, hergestellt ist.

Bevorzugt ist im Getränkebehälter eine zumindest bereichsweise flüssigkeitsdurchlässig ausgebildete Filtereinrichtung angeordnet, die derart ausgebildet ist, dass sie eine Rückhaltefunktion für das Getränkesubstrat hat und eine Verteilung der Aromastoffe des Getränkesubstrats in der erhitzten Flüssigkeit ermöglicht. Als Filtereinrichtung kann beispielsweise eine aus Filterpapier gebildete, vorzugsweise geschlossen ausgeführte Tasche eingesetzt werden, in der das Getränkesubstrat aufgenommen ist. Alternativ ist die Filtereinrichtung als Dauerfilter ausgebildet, der für eine mehrfache Verwendung vorgesehen ist und der beispielsweise aus einem gelochten, dünnwandigen Metallblech oder aus gelochtem oder porösem Kunststoff hergestellt ist. Dabei ist die Größe der Löcher oder Poren in dem Material der Filtereinrichtung derart gewählt, dass ein intensiver Aromaaustausch zwischen dem Getränkesubstrat und der erhitzten Flüssigkeit gewährleistet ist, während nichtlösliche Bestandteile des Getränkesubstrats nicht durch die Löcher oder Poren aus der Filtereinrichtung in die erhitzte Flüssigkeit austreten können.

In weiterer Ausgestaltung der Erfindung ist das Rührmittel als Aufnahme für die entnehmbar ausgeführte Filtereinrichtung ausgebildet. Somit kann die Filtereinrichtung abseits des Heißgetränkezubereiters mit dem Getränkesubstrat befüllt werden und anschließend mit dem Rührmittel gekoppelt werden. Exemplarisch ist die Filtereinrichtung als Filterbeutel aus Filterpapier ausgebildet, wobei das Getränkesubstrat in das Innere des Filterbeutels gefüllt wird und der Filterbeutel anschließend am Rührmittel festgelegt wird. Hierzu kann das Rührmittel beispielsweise mit Halteklammern versehen sein, die gegebenenfalls auch einen sicheren Verschluss einer Einfüllöffnung des Filterbeutels gewährleisten. Durch die Anbringung der Filtereinrichtung am Rührmittel wird eine besonders intensive Durchmischung der erhitzten Flüssigkeit mit dem Getränkesubstrat erreicht, so dass eine Verkürzung des Zubereitungsvorgangs und/oder eine Reduzierung des Getränkesubstrateinsatzes, insbesondere ohne Qualitätsverlust beim erzeugten Heißgetränk, erzielt werden kann.

Zweckmäßig ist es, wenn die Filtereinrichtung in das Rührmittel integriert ist. Dadurch kann eine einfache Handhabung des Heißgetränkezubereiters sichergestellt werden, da stets eine sichere Verbindung zwischen dem Rührmittel und der Filtereinrichtung gewährleistet ist.

Bei einer vorteilhaften Weiterbildung der Erfindung ist vorgesehen, dass eine Einfüllöffnung der Filtereinrichtung für die Zuführung von Getränkesubstrat oberhalb eines vorgebbaren maximalen Flüssigkeitsspiegels des Getränkebehälters angeordnet ist, insbesondere um eine Zufuhr von Getränkesubstrat während des Getränkezubereitungsvorgangs zu ermöglichen. Bei einer derartigen Anordnung der Einfüllöffnung ist einerseits sichergestellt, dass schwimmfähige Bestandteile des Getränkesubstrats, beispielsweise Teeblätter, während des Rührvorgangs bei der Getränkezubereitung nicht in die erhitzte Flüssigkeit gelangen und andererseits auch während des Rührvorgangs oder in Pausen zwischen Rührvorgängen eine einfache und leicht handzuhabende Zufuhr von Getränkesubstrat erfolgen kann. Bevorzugt ist die Einfüllöffnung der Filtereinrichtung rotationssymmetrisch zu einer Rotationsachse des Rührmittels ausgebildet, so dass auch beim Betrieb der Rühreinrichtung eine Zufuhr von Getränkesubstrat in die Filtereinrichtung erfolgen kann. Dies ist beispielsweise dann von Bedeutung, wenn das Getränkesubstrat mehrere unterschiedliche Komponenten umfasst, die in einer zeitlichen Abfolge während des Getränkezubereitungsvorgangs in die Filtereinrichtung zugeführt werden sollen.

Vorteilhaft ist es, wenn die Steuerungseinrichtung derart eingerichtet ist, dass der Betrieb der Rühreinrichtung in Abhängigkeit von der Zufuhr und/oder der Temperatur der Flüssigkeit erfolgt. Beispielsweise ist es bei der Zubereitung mancher Heißgetränke wie indischem Tee erforderlich, die mit dem Getränkesubstrat versehene Flüssigkeit mehrmals aufzukochen und wieder abkühlen zu lassen, um die gewünschte Extraktion der Geschmacksstoffe aus dem Getränkesubstrat zu erzielen. in gleicher Weise kann es vorteilhaft sein, die Rühreinrichtung während einer oder mehrerer Aufwärmphasen der Flüssigkeit mit einer anderen, insbesondere höheren, Rührgeschwindigkeit zu betreiben als in den dazwischenliegenden Abkühlphasen. Besonders vorteilhaft ist der Steuerungseinrichtung eine Eingabe- und Bedieneinrichtung, insbesondere mit einer Anzeigeeinrichtung, zugeordnet, mit deren Hilfe die gewünschten Temperatur- und/oder Rührprofile gewählt und gegebenenfalls verändert werden können. Ergänzend oder alternativ kann vorgesehen werden, die Rühreinrichtung und/oder die Heizungseinrichtung derart anzusteuern, dass ein Zubereitungsvorgang für das Heißgetränk nur dann gestartet wird, wenn der Füllstandssensor einen ausreichenden Füllstand im Getränkebehälter detektiert.

In weiterer Ausgestaltung der Erfindung ist vorgesehen, dass eine Zufuhreinrichtung für eine weitere Flüssigkeit, insbesondere Milch, einen Vorratsbehälter und/oder ein Fördermittel und/oder ein Dosierventil umfasst und für eine Flüssigkeitszufuhr in den Getränkebehälter ausgebildet ist. Die Zufuhreinrichtung ermöglicht somit eine vorzugweise vom Zubereitungsfortschritt des Heißgetränks abhängige automatisierte Zudosierung der zweiten Flüssigkeit, wobei die Zudosierung im Hinblick auf den Zeitpunkt und/oder auf die Dosierungsmenge für die zweite Flüssigkeit, insbesondere mit Hilfe der Steuerungseinrichtung, einstellbar sein kann. Die zweite Flüssigkeit kann mittels eines Schlauchs und gegebenenfalls mittels eines Fördermittels aus einem Originalgebinde, beispielsweise einem Milchkarton, in den Getränkebehälter gefördert werden. Ergänzend oder alternativ kann ein zweiter Vorratsbehälter als Bestandteil des Heißgetränkezubereiters vorgesehen werden, in dem die zweite Flüssigkeit bevorratet wird. Die Zufuhr der zweiten Flüssigkeit kann mit Hilfe eines, insbesondere mit der Steuerungseinrichtung gekoppelten, Dosierventils besonders exakt eingestellt werden.

Bevorzugt ist der Füllstandssensor mit der Steuerungseinrichtung verbunden, um eine Flüssigkeitszufuhr und/oder eine Flüssigkeitsabfuhr und/oder eine Wärmezufuhr in den Getränkebehälter zu steuern. Der Füllstandssensor kann dazu eingesetzt werden, die Befüllung des Getränkebehälters zu Beginn und/oder während der Durchführung des Getränkezubereitungsvorgangs zu überwachen und mittels der Steuerungseinrichtung eine Zufuhr von Flüssigkeit zu bewirken und/oder zu stoppen. Darüber hinaus kann der Füllstandssensor dazu eingesetzt werden, während des Getränkezubereitungsvorgangs den Füllstand im Getränkebehälter zu überwachen, um beispielsweise bei einem Aufschäumen der Flüssigkeit durch Veränderung der Rührgeschwindigkeit der Rühreinrichtung und/oder durch Veränderung der Heizleistung der Heizungseinrichtung und/oder durch Flüssigkeitszufuhr, beispielsweise der zweiten Flüssigkeit, ein weiteres Aufschäumen des Heißgetränks zu vermeiden. Der Füllstandssensor kann als optischer Sensor, insbesondere als optischer Transmissions- oder Reflexionssensor, ausgebildet sein, wodurch eine kontaktlose Überwachung des Füllstands ermöglicht wird.

Bevorzugt sind zwei längs einer Rotationsachse linear zueinander beabstandete Füllstandssensoren und/oder ein Temperatursensor, insbesondere an der Rühreinrichtung und/oder im Getränkebehälter, vorgesehen. Mit Hilfe der wenigstens zwei Füllstandssensoren kann ermittelt werden, ob ein Mindestniveau für die Flüssigkeit im Getränkebehälter vorliegt und/oder ob ein Maximalniveau für die Flüssigkeit im Getränkebehälter überschritten ist. In beiden Fällen kann die Steuerungseinrichtung derart eingerichtet sein, dass sie den Start der Heißgetränkezubereitung, insbesondere die Erhitzung der Flüssigkeit, verhindert. Mit Hilfe des gegebenenfalls vorgesehenen Temperatursensors kann die Temperatur der Flüssigkeit im Getränkebehälter durch die Steuerungseinrichtung überwacht oder geregelt werden.

In weiterer Ausgestaltung der Erfindung ist ein Produktbehälter für das erzeugte Getränk vorgesehen, wobei zwischen dem Getränkebehälter und dem Produktbehälter eine Verbindungsleitung für eine Zufuhr des Getränks aus dem Getränkebehälter in den Produktbehälter ausgebildet ist und wobei der Verbindungsleitung ein mit der Steuerungseinrichtung gekoppeltes Sperrventil und/oder eine mit der Steuerungseinrichtung gekoppelte Fördereinrichtung zugeordnet ist. Der Produktbehälter und die zugehörige Verbindungsleitung ermöglichen eine automatisierte Entleerung des Getränkebehälters nach Durchführung des Getränkezubereitungsvorgangs, beispielsweise um ein zu langes Verweilen des in der Filtereinrichtung aufgenommenen Getränkesubstrats im Heißgetränk zu vermeiden. Darüber hinaus kann der Produktbehälter beispielsweise als isoliertes Warmhaltegefäß ausgebildet sein, in dem das Heißgetränk über einen längeren Zeitraum ohne äußere Wärmezufuhr eine vorgebbare Serviertemperatur nicht unterschreitet. Vorzugsweise ist die Steuerungseinrichtung derart eingerichtet, dass eine Zufuhr des zubereiteten Heißgetränks aus dem Getränkebehälter in den Produktbehälter zu einem vorgebbaren Zeitpunkt, beispielsweise durch entsprechende Ansteuerung eins Sperrventils und/oder einer Fördereinrichtung durch die Steuerungseinrichtung erfolgt.

Bei einer Weiterbildung der Erfindung ist vorgesehen, dass die Steuerungseinrichtung derart ausgebildet ist, dass sie eine Abfolge aufeinander folgender Erwärmungs- und Abkühlungszyklen mit vorgebbarer Zyklusdauer und/oder vorgebbaren Zieltemperaturen für einen Erwärmungszyklus und einen Abkühlungszyklus mit Hilfe der Heizungseinrichtung oder der Heizungseinrichtung und der Rühreinrichtung vornehmen kann. Dabei kann vorgesehen sein, dass ein Benutzer des Heißgetränkezubereiters die Anzahl der Erwärmungs-und Abkühlungszyklen und/oder die Dauer dieser Zyklen und/oder die Zieltemperaturen für die jeweiligen Zyklen festlegen kann. Alternativ kann vorgesehen sein, dass die Zyklenzahl, Dauer und Zieltemperaturen fest in der Steuerungseinrichtung einprogrammiert sind.

Vorteilhafte Ausführungsformen der Erfindung sind in der Zeichnung dargestellt. Hierbei zeigt:
- Figur 1: eine schematische Darstellung einer ersten Ausführungsform eines Heißgetränkezubereiters,
- Figur 2: eine Ausschnittdarstellung einer zweiten Ausführungsform eines Heißgetränkezubereiters,
- Figur 3: eine perspektivische Darstellung der Filtereinrichtung,
- Figur 4: eine Vorderansicht und eine Seitenansicht eines Rührmittels, das zur Aufnahme einer Filtereinrichtung ausgebildet ist,
- Figur 5: eine schematische Darstellung einer dritten Ausführungsform eines Heißgetränkezubereiters,
- Figur 6: eine schematische Darstellung einer vierten Ausführungsform eines Heißgetränkzubereiters in einer Betriebsstellung und
- Figur 7: der Heißgetränkzubereiter gemäß Figur 6 in einer Wartungsstellung.

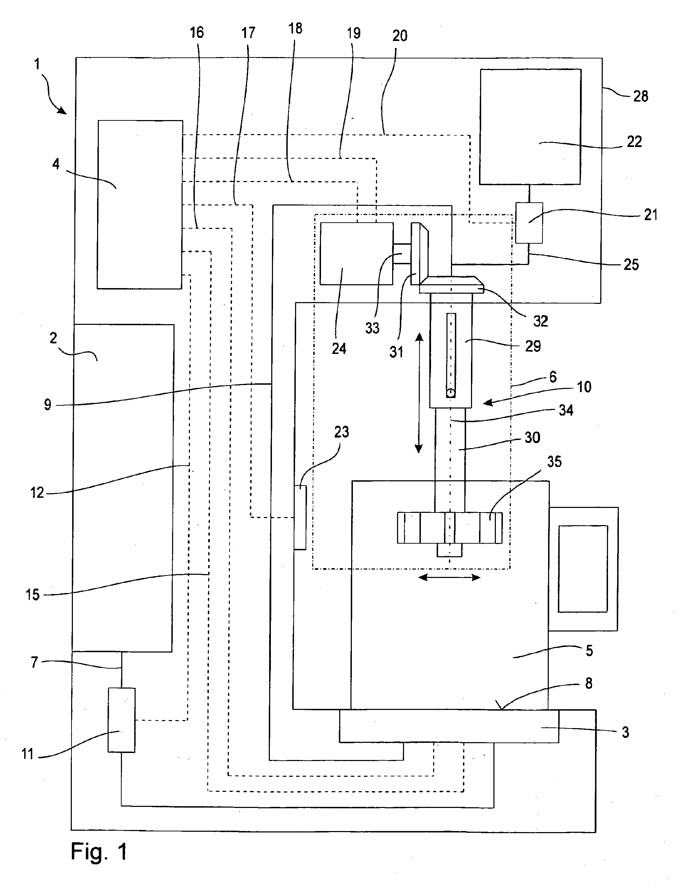

Ein schematisch in der Figur 1 dargestellter Heißgetränkezubereiter 1 umfasst einen Vorratsbehälter 2, eine Heizungseinrichtung 3, eine Steuerungseinrichtung 4, einen Getränkebehälter 5 sowie eine Rühreinrichtung 6. Der Vorratsbehälter 2 ist zur Aufnahme einer ersten Flüssigkeit, insbesondere Wasser, ausgebildet und steht über eine erste Fluidleitung 7 in fluidisch kommunizierender Verbindung mit der Heizungseinrichtung 3. Die Heizungseinrichtung ist exemplarisch als Heizspirale mit integriertem Wasserkanal für eine Durchlauferhitzung der aus dem Vorratsbehälter 2 bereitgestellten Flüssigkeit sowie für eine Erwärmung des Bodenbereichs 8 des Getränkebehälters 5 ausgebildet. Die in der Heizungseinrichtung 3 erwärmte Flüssigkeit wird über eine als Steigrohr ausgebildete zweite Fluidleitung 9 in den Getränkebehälter 5 geleitet. Exemplarisch ist die zweite Fluidleitung abschnittsweise durch ein der Rühreinrichtung 6 zugehöriges Rührmittel 10 geführt.

In der ersten Fluidleitung 7 zwischen dem Vorratsbehälter 2 und der Heizungseinrichtung 3 ist ein Sperrventil 11 angeordnet, das für eine Freigabe oder Sperrung eines Fluidstroms aus dem Vorratsbehälter 2 in die Heizungseinrichtung 3 und damit in den Getränkebehälter 5 ausgebildet ist. Das Sperrventil 11 steht über eine Steuerleitung 12 in elektrischer Kommunikation mit der Steuerungseinrichtung 4 und kann dadurch von der Steuerungseinrichtung mittels eines entsprechenden Steuersignals zwischen dem Freigabezustand und dem Sperrzustand geschaltet werden.

Die Steuerungseinrichtung 4 steht exemplarisch über weitere Steuerleitungen 15 bis 20 in elektrisch kommunizierender Verbindung mit der Heizungseinrichtung 3, um die zur Erwärmung der Flüssigkeit notwendige elektrische Energie bereitzustellen, mit einem Füllstandssensor 23, der zur Überwachung eines Flüssigkeitsspeigels im Getränkebehälter vorgesehen ist, mit einem der Rühreinrichtung 6 elektrischen Motor 24 sowie mit einem Sperrventil 21, das in eine dritte Fluidleitung 25 eingeschleift ist, die sich zwischen einem zweiten Vorratsbehälter 22 und der zweiten Fluidleitung 9 erstreckt.

Vorzugsweise sind sämtliche vorgenannten Komponenten mit Ausnahme des Getränkebehälters 5 in und gegebenenfalls an einem gemeinsamen Gehäuse 28 angeordnet. Die Rühreinrichtung 6 umfasst neben dem Motor 24 das Rührmittel 10, das exemplarisch teleskopierbar ausgebildet ist. Das Rührmittel 10 umfasst einen im Gehäuse 28 drehbar gelagerten Schaft 29 sowie einen drehfest und linearverschieblich am Schaft 29 gelagerten Rührer 30. Vorzugsweise sind nicht näher dargestellte Rastmittel vorgesehen, die den Rührer 30 in der dargestellten Funktionsposition und/oder in einer an den Schaft 29 angenäherten Ruheposition verrasten und somit während des Rührvorgangs und/oder beim Entnehmen des Getränkebehälters 5 eine definierte Positionierung des Rührers 30 gewährleisten. Zwischen dem elektrischen Motor 24 und dem drehbar gelagerten Schaft 29 ist exemplarisch ein Winkelgetriebe ausgebildet, das ein mit der Motorwelle 33 des elektrischen Motors 24 drehfest verbundenes erstes Kegelrad 31 sowie ein drehfest mit dem Schaft 29 verbundenes zweites Kegelrad 32 umfasst.

Im Schaft 29 und im Rührer 30 ist ein vorzugsweise konzentrisch zur Rotationsachse 34 ausgebildeter, nicht dargestellter Kanal vorgesehen, durch den die zweite Fluidleitung 9 geführt ist und der an einer unteren Stirnseite des Rührers 30, die dem Bodenbereich 8 des Getränkebehälters 5 gegenüberliegt, ausmündet. Durch diese Anordnung der zweiten Fluidleitung 9 kann auch während einer Rotation des Rührers 30 um die Rotationsachse 34 eine gefahrlose automatisierte Zufuhr von Flüssigkeit aus dem ersten Vorratsbehälter 2 und/oder aus dem zweiten Vorratsbehälter 22 erfolgen. Eine Überwachung des von der Steuerungseinrichtung 4 bewirkten Befüllvorgangs für den Getränkebehälter 5 erfolgt über den Füllstandssensor, der exemplarisch als optischer Sensor auf Basis einer Reflexionsmessung ausgebildet ist und einen auf die Oberfläche des beispielhaft aus Glas hergestellten Getränkebehälters 5 aussendet und die vom Füllstand abhängige Reflexantwort auswertet. Bei der in Figur 1 dargestellten Ausführungsform des Heißgetränkezubereiters 1 weist der Rührer 30 mehrere in radialer Richtung senkrecht zur Rotationsachse 34 abstehende Rührflügel 35 auf. Die Rührflügel 35 gewährleisten eine vorteilhafte Durchmischung der im Getränkebehälter 5 aufgenommenen Flüssigkeit mit dem in die Flüssigkeit eingestreuten Getränkesubstrat.

Für eine Zubereitung eines Heißgetränks, beispielsweise eines indischen Tees, kann der Heißgetränkezubereiter 1 exemplarisch in der folgenden Weise betrieben werden. Zunächst wird von der Steuerungseinrichtung 4 nach Überprüfung eines Flüssigkeitsfüllstands im ersten Vorratsbehälter 2 eine zeitweilige Freigabe des Sperrventils 11 in der ersten Fluidleitung 7 sowie eine Beaufschlagung der Heizungseinrichtung 3 mit elektrischer Energie bewirkt. Hierdurch kann die erste Flüssigkeit, bei der es sich beispielhaft um Wasser handelt, aus dem Vorratsbehälter 2 durch die erste Fluidleitung 7 zur Heizungseinrichtung 3 strömen, um dort erwärmt zu werden und anschließend durch die zweite Fluidleitung 9 und das Rührmittel 10 in den Getränkebehälter 5 zu strömen. Im Getränkebehälter 5 sind beispielsweise Teeblätter und Gewürze als Getränkesubstrat enthalten, entweder in loser Form oder in einem Teebeutel aus Filterpapier oder einem Teesieb aus Metall oder Kunststoff. Nach Zudosierung einer von der Steuereinrichtung 4 vorgegebenen Flüssigkeitsmenge in den Getränkebehälter 5 wird das Sperrventil 11 geschlossen. Die Beaufschlagung der Heizungseinrichtung 3 mit elektrischer Energie wird aufrechterhalten, um durch Wärmeübertragung durch den Bodenbereich des Getränkebehälters 5 hindurch eine weitere Erwärmung der Flüssigkeit im Getränkebehälter 5 zu bewirken. Zudem kann die Rühreinrichtung 6 durch Bereitstellung elektrischer Energie an den elektrischen Motor 24 aktiviert werden, so dass die im Getränkebehälter 5 aufgenommene Flüssigkeit mittels der Rührflügel 35 am Rührer 30 in eine Drehbewegung versetzt wird, durch die eine vorteilhafte Durchmischung der Flüssigkeit und dadurch eine effektive Extraktion der im Getränkesubstrat enthaltenen Aromastoffe erfolgt. Nach Erreichen einer vorgebbaren Zieltemperatur, die von der Steuerungseinrichtung 4 entweder durch eine Zeitsteuerung des Erwärmungsvorgangs oder eine Temperaturregelung mittels eines nicht dargestellten Temperatursensors, insbesondere in der Heizungseinrichtung 3, kontrolliert wird, erfolgt exemplarisch eine Abschaltung der Heizungseinrichtung 3. Da die Rühreinrichtung 6 weiterbetrieben wird, erfolgt nunmehr eine Abkühlung der Flüssigkeit im Getränkebehälter 5, wobei der Abkühlvorgang durch Variation der Drehzahl des elektrischen Motors 24 beeinflusst werden kann. Anschließend kann das zweite Sperrventil 21 geöffnet werden, um die zweite Flüssigkeit, insbesondere Milch, aus dem zweiten Vorratsbehälter 22 über die dritte und die zweite Fluidleitung 25, 9 in den Getränkebehälter 5 zuzuführen. Nachdem die gewünschte Menge der zweiten Flüssigkeit in den Getränkebehälter 5 zudosiert wurde und mittels der Rühreinrichtung 6 homogen im Getränkebehälter 5 verteilt wurde, kann durch ein oder mehrmaliges Erhitzen und zwischenzeitliche Abkühlen der Flüssigkeit im Getränkebehälter 5 das Heißgetränk fertiggestellt werden. Dabei kann der Füllstandssensor 23 dazu eingesetzt werden, ein Aufschäumen des Heißgetränks im Getränkebehälter 5 zu überwachen und bei Überschreiten eines vorgebbaren Flüssigkeitsspiegels im Getränkebehälter 5 eine Erhöhung der Drehzahl der Rühreinrichtung 6 und/oder eine Abschaltung der Heizungseinrichtung 3 bewirken, um ein Überlaufen des Heißgetränks über den oberen Rand des Getränkebehälters 5 zu vermeiden. Am Ende des Zubereitungsvorgangs kann ein optisches und/oder akustisches Signal ausgegeben werden, um einem Bediener die Verfügbarkeit des fertigen Heißgetränks anzuzeigen. Um den Getränkebehälter 5 in einfacher Weise aus dem Heißgetränkezubereiter 1 entnehmen zu können, wird der Rührer 30 durch lineare Verschiebung in vertikaler Richtung aus der in Figur 1 gezeigten Funktionsstellung nach oben in eine nicht dargestellte Ruhestellung gebracht, so dass der Rührer 30 oberhalb des Randes des Getränkebehälters 5 angeordnet ist und der Getränkebehälter in horizontaler Richtung entnommen werden kann.

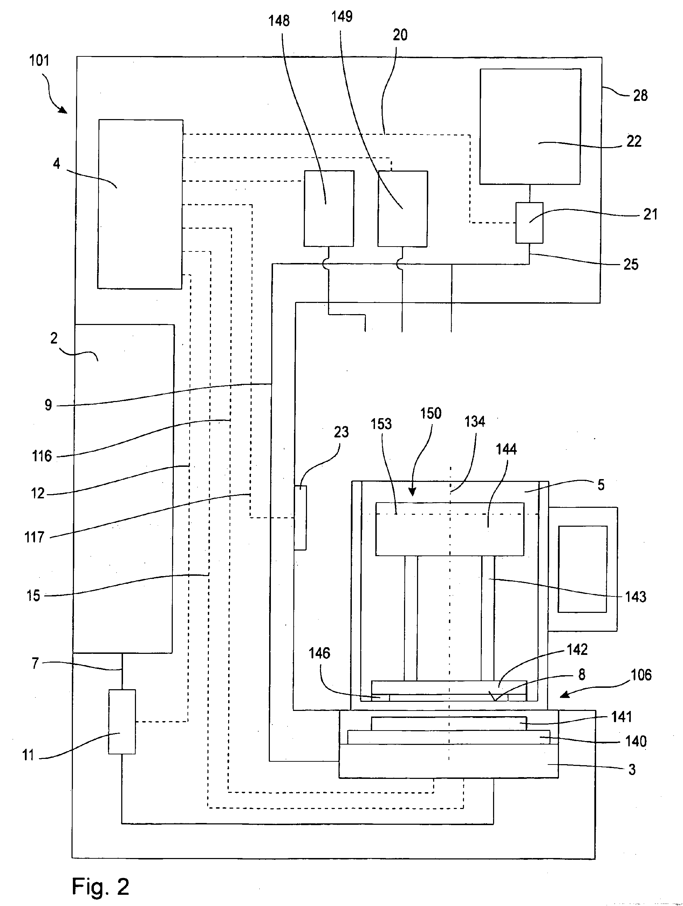

Bei der in Figur 2 dargestellten Ausführungsform eines Heißgetränkezubereiters 101 ist die Rühreinrichtung 106 als Magnetrührer ausgebildet. Der übrige Aufbau des Heißgetränkezubereiters 101 entspricht im Wesentlichen der Ausführungsform gemäß der Figur 1, so dass für funktionsgleiche Komponenten die gleichen Bezugszeichen verwendet werden.

Die Rühreinrichtung 106 umfasst einen unterhalb des Bodenbereichs 8 des Getränkebehälters 5 angeordneten Antriebsmotor 140, dem ein Permanentmagnet 141 zugeordnet ist sowie einen im Getränkebehälter 5 aufgenommenen Rühreinsatz 150, dem ein zweiter Permanentmagent 142 zugeordnet ist. Die beiden Permanentmagnete 141, 142 bilden eine magnetische Kupplung, mit der das Drehmoment des Antriebsmotors 140 auf den Rühreinsatz 150 übertragen werden kann, um eine Rotationsbewegung um die Rotationsachse 134 zu bewirken. Dadurch kann auf die oberhalb des Getränkebehälters 5 angeordnete Rühreinrichtung 6 verzichtet werden, wodurch sich eine abweichende Gestaltung für den Heißgetränkezubereiter 106 gemäß der zweiten Ausführungsform verglichen mit der ersten Ausführungsform ergibt.

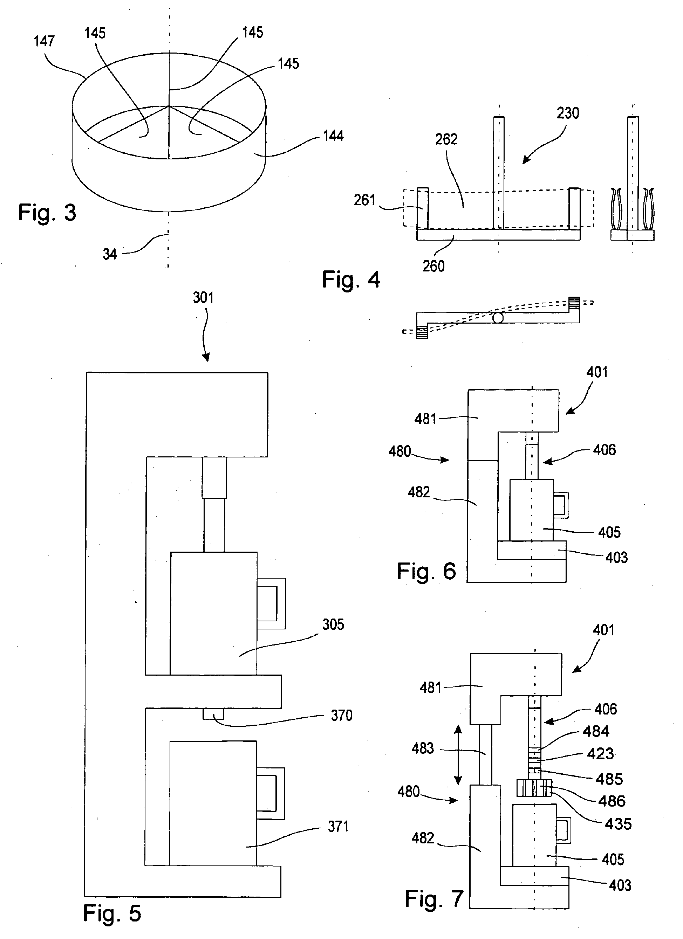

Für eine gute Gleitfähigkeit des Rühreinsatzes 150 sind an dessen dem Bodenbereich 8 zugewandter Unterseite Gleitelemente 146, beispielsweise aus einem Kunststoffmaterial, angebracht. Der Rühreinsatz 150 umfasst weiterhin einen Siebeinsatz 144, der über Tragsäulen 143 mit dem Permanentmagnet 142 gekoppelt ist. Der in der Figur 3 näher dargestellte Siebeinsatz 144 ist vorzugsweise aus gelochtem oder porösem Material, insbesondere Kunststoff oder Metall, hergestellt und weist eine in vertikaler Richtung nach oben ausgerichtete Öffnung 147 auf. Da die Rühreinrichtung 106 bei dieser Ausführungsform von der Unterseite des Getränkebehälters 5 angetrieben wird, kann eine Zufuhr von Getränkesubstrat in den Siebeinsatz 144 auch während des Rührvorgangs vorgenommen werden. Vorzugsweise wird der Flüssigkeitsspiegel im Getränkebehälter 5 derart eingestellt, dass er die gestrichelte Linie in der Figur 2 nicht übersteigt, so dass zu jedem Zeitpunkt ein unerwünschtes Ausschwemmen von Getränkesubstrat aus dem Siebeinsatz 144 vermieden wird. Um eine möglichst große Austauschfläche zwischen dem Getränkesubstrat und der Flüssigkeit, die in den Siebeinsatz 144 einströmen kann, zu gewährleisten, ist der Siebeinsatz 144 mit mehreren Trennwänden 145 versehen, die sich vorzugsweise in radialer Richtung ausgehend vom Zentrum des Siebeinsatzes 144 erstrecken.

Der Heißgetränkezubereiter 101 ist zudem exemplarisch mit zwei Dosiervorrichtungen 148 und 149 versehen, die schematisch dargestellt sind und die jeweils einen Vorratsbehälter und ein nicht näher dargestelltes, von der Steuerungseinrichtung 4 ansteuerbares Dosierelement, beispielsweise in der Art eines elektromagnetisch ansteuerbaren Schiebers, aufweisen. Die Dosiervorrichtungen 148 und 149 können exemplarisch mit Tee und mit Gewürzen befüllt sein. Sie werden von der Steuerungseinrichtung 4 während der Zubereitung des Heißgetränks derart angesteuert, dass beispielsweise zunächst die gewünschte Teemenge in den Siebeinsatz 144 dosiert wird und nach einer vorgebbaren Zeitdauer eine Zudosierung der Gewürze aus der zweiten Dosiervorrichtung 149 erfolgt. Dabei können die Abfolge und der Umfang der Dosiervorgänge durch benutzerdefinierte Programmierung vorgegeben werden. Zusammen mit der Ansteuerung der Rühreinrichtung 106, der Heizungseinrichtung 3, dem Sperrventil 11 und dem Sperrventil 21 kann somit auch die Zubereitung komplexerer Rezepturen für Heißgetränke, beispielsweise für indischen Tee, mit dem erfindungsgemäßen Heißgetränkezubereiter 101 vorgenommen werden. hierbei ist es vorteilhaft, dass der Siebeinsatz 144 nach oben offen ist und die Oberkante des Siebeinsatzes 144 oberhalb des maximal vorgesehenen Flüssigkeitsspiegels 153 im Getränkebehälter 5 liegt. Hierdurch kann die Zuführung der Bestandteile des Getränkesubstrats, also insbesondere der Teeblätter und der Gewürze, durch direkte Dosierung aus den Dosiervorrichtungen 148 und 149 unter Ausnutzung der Schwerkraft erfolgen und es ist kein aufwendiges Öffnen und Verschließen eines Siebeinsatzes notwendig.

Bei einer weiteren Ausführungsform eines in der Figur 3 dargestellten Rührers 230 ist dieser im Wesentlichen T-förmig ausgebildet, wobei an Endbereichen einer Querstrebe 260 jeweils eine Halteklammer 261 ausgebildet ist. In die Halteklammern 261 kann ein Filterbeutel 262 eingeschoben und festgelegt werden, in dem das Getränkesubstrat, das sowohl lösliche als auch unlösliche Bestandteile umfassen kann, aufgenommen ist. Durch die Rotationsbewegung des Rührers 230 und des daran festgelegten Filterbeutels 262 in der Flüssigkeit wird die gewünschte intensive Extraktion der Aromen aus dem Getränkesubstrat im Filterbeutel 162 gewährleistet. Der Rührer 230 kann anstelle des Rührers 30 in die Rühreinrichtung 6 gemäß der Figur 1 eingesetzt werden.

Die in der Figur 5 dargestellte dritte Ausführungsform eines Heißgetränkezubereiters 301 weist zusätzlich zu den aus der ersten Ausführungsform des Heißgetränkezubereiters 1 bekannten Komponenten noch einen Produktbehälter 371 auf, der unterhalb des gegenüber der Ausführungsform gemäß Figur 1 modifizierten Getränkebehälters 305 angeordnet ist. Der Getränkebehälter 305 weist am Boden einen nicht näher dargestellten Auslass auf, der durch die unterhalb des Getränkebehälters 305 angeordnete Heizungseinrichtung geführt ist und in einem Auslassstutzen 370 mündet. Dem Auslass im Getränkebehälter 305 ist ein nicht dargestelltes Sperrventil zugeordnet, das von der Steuerungseinrichtung 4 ansteuerbar ist, um nach Fertigstellung des Heißgetränks ein Ablassen des Heißgetränks aus dem Getränkebehälter 305 in den Produktbehälter 371 zu ermöglichen, der insbesondere als Thermogefäß ausgebildet ist. Damit kann sichergestellt werden, dass ein Kontakt zwischen Heißgetränk und Getränkesubstrat nach einer vorgegebenen Zubereitungszeit unterbunden wird.

Der in den Figuren 6 und 7 dargestellte Heißgetränkzubereiter 401 unterscheidet sich von den vorstehend beschriebenen Ausführungsformen durch die Verwendung einer als Induktionskochfeld ausgebildeten Heizungseinrichtung 403 sowie durch einen auf diese Heizungseinrichtung 403 angepassten Getränkebehälter 405, der aus einem Material mit ferromagnetischem Anteil hergestellt ist. Ferner ist die Rühreinrichtung 406 starr ausgebildet, da das Gehäuse 480 in einen Gehäuseunterteil 481 und einen Gehäuseoberteil 482 aufgeteilt ist, die mit einer Teleskopeinrichtung 483 verbunden sind. Die Teleskopeinrichtung 483, die passiv, beispielsweise mit einer Gasfeder, oder aktiv, beispielsweise mit einem elektrischen Spindelantrieb ausgerüstet sein kann, ermöglicht in einfacher Weise ein Entfernen des Gehäuseoberteils 481 vom Gehäuseunterteil 482, wodurch die Rühreinrichtung 406 aus dem Getränkebehälter 405 ausgefahren wird. Dadurch kann der Getränkebehälter 405 in einfacher Weise von der Heizungseinrichtung 403 entfernt werden.

Vorzugsweise ist der Rührer 430 abnehmbar von der Motorwelle 433 des nicht näher dargestellten, im Gehäuseoberteil 481 integrierten elektrischen Antriebsmotors abnehmbar ausgebildet, um eine Reinigung des Rührers, beispielsweise in einer Spülmaschine zu ermöglichen. Die Rührflügel 435 des Rührers 430 sind vorzugsweise derart ausgebildet, dass sie bei einer Rotationsbewegung um die Drehachse 434 in einer ersten Drehrichtung eine vorteilhafte Durchmischung des im Getränkebehälter 405 aufgenommenen Heißgetränks ermöglichen. Bei einer Rotationsbewegung des Rührers 430 um die Drehachse 434 in einer zweiten, der ersten entgegengesetzten Drehrichtung wird hingegen ein hoher Eintrag von Umgebungsluft in das im Ge-, tränkebehälter 405 aufgenommenen Heißgetränks ermöglicht, um eine rasche Abkühlung, insbesondere vor der Durchführung des nächsten Erwärmungszyklus für das Heißgetränks und/oder eine verbesserte Extraktion der im Getränkesubstrat enthaltenen Aroma- und Inhaltsstoffe zu erreichen. Die Rührflügel 435 sind an einem exemplarisch siebförmig ausgeführten und somit als Filtereinrichtung dienenden Grundkörper 486 angebracht, in den das Getränkesubstrat, insbesondere bei abgenommenem Rührer 430, eingefüllt werden kann, damit dieses während des Zubereitungsvorgangs für das Heißgetränk in intensiven Austausch mit der Flüssigkeit gelangt und dennoch aus der Flüssigkeit zurückgehalten wird.

Für die Durchführung des Getränkezubereitungsvorgangs wird zunächst der bereits mit Flüssigkeit befüllte Getränkebehälter 405 auf die Heizeinrichtung 403 gestellt und die Rühreinrichtung 406 im abgenommenen Zustand mit dem Getränkesubstrat befüllt. Nach Ankopplung der Rühreinrichtung 406 an die im Gehäuseoberteil 481 angeordnete, nicht näher bezeichnete Antriebswelle kann das Gehäuseoberteil 481 manuell oder automatisiert abgesenkt werden, so dass die Rühreinrichtung 406 zumindest teilweise in die Flüssigkeit im Getränkebehälter 405 eintaucht. Alternativ kann ein nicht dargestelltes Klappscharnier zwischen dem Gehäuseoberteil 481 und dem Gehäuseunterteil 482 vorgesehen sein, um ein Entfernen und Zuführen des Getränkebehälters 405 und gegebenenfalls eine Reinigung und Befüllung des Rührers 430 mit Getränkesubstrat zu erleichtern.

Am Rührer 430 sind ein Füllstandssensor 423, ein Überschäumsensor 484 und ein Temperatursensor 485 angeordnet, die in einer nicht näher dargestellten elektrischen Verbindung zu einer ebenfalls nicht näher dargestellten, insbesondere im Gehäuseoberteil 481 angeordneten Steuerungseinrichtung stehen.

Mit Hilfe des Füllstandssensors 423 kann vor Beginn der Heißgetränkezubereitung ermittelt werden, ob genug Flüssigkeit für die Durchführung der Heißgetränkezubereitung im Getränkebehälter 405 vorliegt. Sofern dies nicht der Fall sein sollte, kann vorgesehen sein, dass der Heißgetränkezubereiter 401 ein Warnsignal ausgibt und/oder dass der Heißgetränkezubereitungsvorgang nicht weitergeführt wird.

Mit Hilfe des Überschäumsensors 484 kann vor Beginn der Heißgetränkezubereitung ermittelt werden, ob eventuell zu viel Flüssigkeit für die Durchführung der Heißgetränkezubereitung im Getränkebehälter 405 vorliegt. Sofern dies der Fall sein sollte, kann ein Warnsignal ausgegeben werden, um den Benutzer zu einer Reduzierung des Flüssigkeitspegels aufzufordern. Sofern der Flüssigkeitspegel vor Beginn der Heißgetränkezubereitung in dem von den beiden Sensoren 423 und 484 bestimmten Intervall liegt, kann mit der Heißgetränkezubereitung begonnen werden. Hierzu wird die Heizungseinrichtung 403 mit elektrischer Energie beaufschlagt und der Rührer 430 in der ersten Drehrichtung um die Rotationsachse 434 rotiert. Dies erfolgt solange, bis mittels des Temperatursensors 485 eine erste Zieltemperatur für den ersten Erwärmungsvorgang erreicht wurde, die gegebenenfalls durch entsprechende Regelung der Heizungseinrichtung 405 über ein vorgebbares Zeitintervall gehalten wird.

Sofern sich während dieses Erwärmungszyklus, insbesondere bei Erreichen der Kochtemperatur des Heißgetränks, auf der Oberfläche des Heißgetränks Schaum bilden sollte oder der Flüssigkeitsspiegel aus anderen Gründen ansteigt, so dass ein vom Überschäumsensor 484 vorgegebenes Niveau im Getränkebehälter 405 überschritten wird, können Gegenmaßnahmen gegen ein Überschäumen des Heißgetränks vorgesehen werden. Diese Gegenmaßnahmen können beispielsweise die Erhöhung der Drehzahl des Rührers 430 und/oder die Reduzierung der Energiezufuhr an die Heizungseinrichtung 403 umfassen.

Nach Beendigung des Erwärmungszyklus findet ein Abkühlzyklus für das Heißgetränk statt, bei dem vorgesehen sein kann, dass der Rührer 430 in der zweiten Drehrichtung um die Rotationsachse 434 rotiert wird, um einen Eintrag von Umgebungsluft in das Heißgetränk und damit eine rasche Abkühlung bis auf eine zweite Zieltemperatur, die unterhalb der ersten Zieltemperatur liegt, zu erreichen. Für den Abkühlvorgang kann eine vollständige Abschaltung der Heizungseinrichtung 403 vorgesehen sein. Gegebenenfalls wird bei Annäherung an die zweite Zieltemperatur eine zeitweilige Energiezufuhr an die Heizungseinrichtung 403 vorgenommen, sofern die zweite Zieltemperatur über einen längeren Zeitraum gehalten werden soll.

Anschließend erfolgt eine neuerliche Erwärmung des Heißgetränks auf die erste Zieltemperatur, wobei der Rührer 430 wieder in der ersten Drehrichtung rotiert wird. Daran kann sich eine weitere Abkühlphase mit oder ohne Rotation des Rührers 430 anschließen. Gegebenenfalls folgen noch weitere Erwärmungs- und Abkühlzyklen mit gleicher oder abweichender Dauer und/oder gleichen oder abweichenden ersten und zweiten Zieltemperaturen. Vorzugsweise sind drei Erwärmungszyklen mit jeweils gleicher erster Zieltemperatur, die der Kochtemperatur des Heißgetränks entspricht, sowie zwei dazwischenliegende Abkühlzyklen auf die jeweils gleiche zweite Zieltemperatur vorgesehen.

## Patentansprüche

1. Heißgetränkezubereiter für den Haushalts- oder Gastronomiebedarf, mit einer Heizungseinrichtung (3; 403) für die Flüssigkeit, einer Steuerungseinrichtung (4) zur Ansteuerung der Heizungseinrichtung (3; 403) und einem Getränkebehälter (5; 305; 405), der zur Aufnahme von erhitzter Flüssigkeit ausgebildet ist, wobei im Getränkebehälter (5; 305; 405) eine Rühreinrichtung (6; 106; 406) angeordnet ist, die für eine Rührbewegung der erhitzten Flüssigkeit ausgebildet ist, um eine homogene Verteilung eines in die erhitzte Flüssigkeit einbringbaren Getränkesubstrats zu ermöglichen, wobei die Rühreinrichtung (6; 106; 406) eine Filtereinrichtung (206; 486) für eine Aufnahme des Getränkesubstrats umfasst, **dadurch gekennzeichnet, dass** ein Füllstandssensor (23; 423, 484) für eine Füllstandsüberwachung des Getränkebehälters (5; 305; 405) vorgesehen und mit der Steuerungseinrichtung (4) verbunden ist, um eine Wärmezufuhr in den Getränkebehälter (5; 305; 405) und/oder eine Rührgeschwindigkeit der Rühreinrichtung (6; 106; 406) zu steuern und wobei die Steuerungseinrichtung (4) derart eingerichtet ist, dass die Erwärmung der Flüssigkeit im Getränkebehälter (5; 305; 405) anhand eines vorgebbaren Temperaturprofils erfolgt und/oder dass der Betrieb der Rühreinrichtung (6; 106; 406) in Abhängigkeit von einem Füllstand der Flüssigkeit erfolgt.

2. Heißgetränkezubereiter nach Anspruch 1, **dadurch gekennzeichnet, dass** die Rühreinrichtung (6; 106; 406) eine außerhalb des Getränkebehälters (5; 305; 405) angeordnete und mit der Steuerungseinrichtung (4) gekoppelte Antriebseinrichtung (24; 140) umfasst.

3. Heißgetränkezubereiter nach Anspruch 2, **dadurch gekennzeichnet, dass** die Rühreinrichtung (6; 106) einen mit der Antriebseinrichtung (24) verbundenen, teleskopierbaren Schaftabschnitt (20, 30) umfasst, der für eine Höhenverstellung eines im Getränkebehälter (5; 305) anordenbaren Rührmittels (10) ausgebildet ist.

4. Heißgetränkezubereiter nach Anspruch 2, **dadurch gekennzeichnet, dass** die Rühreinrichtung (106) eine Kupplungseinrichtung (141, 142) umfasst, die für eine berührungslose Kraftübertragung zwischen der Antriebseinrichtung (140) und einem im Getränkebehälter (5; 305) anordenbaren Rührmittel (150) ausgebildet ist.

5. Heißgetränkezubereiter nach Anspruch 1, 2, 3 oder 4, **dadurch gekennzeichnet, dass** im Getränkebehälter (5; 305; 405) eine zumindest bereichsweise flüssigkeitsdurchlässig ausgebildete Filtereinrichtung (144; 262; 486) angeordnet ist, die derart ausgebildet ist, dass sie eine Rückhaltefunktion für das Getränkesubstrat hat und eine Verteilung der Aromastoffe des Getränkesubstrats in der erhitzten Flüssigkeit ermöglicht.

6. Heißgetränkezubereiter nach Anspruch 5, **dadurch gekennzeichnet, dass** das Rührmittel (230; 410) als Aufnahme für die entnehmbar ausgeführte Filtereinrichtung (262) ausgebildet ist.

7. Heißgetränkezubereiter nach Anspruch 5, **dadurch gekennzeichnet, dass** die Filtereinrichtung (144) in das Rührmittel (150; 410) integriert ist.

8. Heißgetränkezubereiter nach Anspruch 6 oder 7, **dadurch gekennzeichnet, dass** eine Einfüllöffnung (147) der Filtereinrichtung (144) für die Zuführung von Getränkesubstrat oberhalb eines vorgebbaren maximalen Flüssigkeitsspiegels des Getränkebehälters (5; 305) angeordnet ist, insbesondere um eine Zufuhr von Getränkesubstrat während des Getränkezubereitungsvorgangs zu ermöglichen.

9. Heißgetränkezubereiter nach einem der vorhergehenden Ansprüche, **dadurch gekennzeichnet, dass** die Steuerungseinrichtung (4) derart eingerichtet ist, dass der Betrieb der Rühreinrichtung (6; 106; 406) in Abhängigkeit von der Zufuhr und/oder der Temperatur der Flüssigkeit erfolgt.

10. Heißgetränkezubereiter nach einem der vorhergehenden Ansprüche, **dadurch gekennzeichnet, dass** eine Zufuhreinrichtung (21, 22) für eine weitere Flüssigkeit, insbesondere Milch, einen Vorratsbehälter und/oder ein Fördermittel und/oder ein Dosierventil umfasst und für eine Flüssigkeitszufuhr in den Getränkebehälter (5; 305; 405) ausgebildet ist.

11. Heißgetränkezubereiter nach einem der vorhergehenden Ansprüche, **dadurch gekennzeichnet, dass** der Füllstandssensor mit der Steuerungseinrichtung (4) verbunden ist, um eine Flüssigkeitszufuhr und/oder eine Flüssigkeitsabfuhr in den Getränkebehälter (5; 305; 405) zu steuern.

12. Heißgetränkezubereiter nach Anspruch 11, **dadurch gekennzeichnet, dass** zwei längs einer Rotationsachse (34) linear zueinander beabstandete Füllstandssensoren (423, 484) und/oder ein Temperatursensor (485), insbesondere an der Rühreinrichtung (406) und/oder im Getränkebehälter (406), vorgesehen sind.

13. Heißgetränkezubereiter nach einem der vorhergehenden Ansprüche, **dadurch gekennzeichnet, dass** ein Produktbehälter (371) für das erzeugte Getränk vorgesehen ist und dass zwischen dem Getränkebehälter (305) und dem Produktbehälter (371) eine Verbindungsleitung (370) für eine Zufuhr des Getränks aus dem Getränkebehälter (305) in den Produktbehälter (371) ausgebildet ist, wobei der Verbindungsleitung ein mit der Steuerungseinrichtung (4) gekoppeltes Sperrventil und/oder eine mit der Steuerungseinrichtung gekoppelte Fördereinrichtung zugeordnet ist.

14. Heißgetränkezubereiter nach einem der vorhergehenden Ansprüche, **dadurch gekennzeichnet, dass** die Steuerungseinrichtung (4) derart ausgebildet ist, dass sie eine Abfolge aufeinander folgender Erwärmungs- und Abkühlungszyklen mit vorgebbarer Zyklusdauer und/oder vorgebbaren Zieltemperaturen für einen Erwärmungszyklus und einen Abkühlungszyklus mit Hilfe der Heizungseinrichtung (3; 403) oder der Heizungseinrichtung (3; 403) und der Rühreinrichtung (6; 406) vornehmen kann.

## Claims

1. Hot beverage preparation device for household- or gastronomic needs, comprising a heating device (3; 403) for the liquid, a control device (4) for controlling the heating device (3; 403), and a beverage container (5; 305; 405) which is configured for accommodating heated liquid, wherein a stirring unit (6; 106; 406) is disposed in the beverage container (5; 305; 405), the stirring unit is configured for a stirring movement of the heated liquid in order to facilitate a homogeneous distribution of a beverage substrate that can be introduced in the heated liquid, wherein the stirring unit (6; 106; 406) comprises a filtering device (206; 486) for accommodating a beverage substrate, **characterized in that** a liquid level sensor (23; 423, 484) for a monitoring of a liquid level in the beverage container (5; 305; 405) is provided, which is connected to the control device (4) to control a heat supply to the beverage container (5; 305; 405) and/or a stirring speed of the stirring unit (6; 106; 406) and **in that** the control device (4) is arranged in a way that the heating of the liquid in the beverage container (5; 305; 405) takes place by means of a predeterminable temperature profile and/or that the operation of the stirring unit (6; 106; 406) takes place depending on the filling level of the liquid.

2. Hot beverage preparation device according to claim 1, **characterized in that** the stirring unit (6; 106; 406) comprises a driving device (24; 140) disposed outside the beverage container (5; 305; 405) and coupled with the control device (4).

3. Hot beverage preparation device according to claim 2, **characterized in that** the stirring unit (6; 106) comprises a telescopic shaft section (20, 30) connected to the driving device (24), which is configured for a height adjustment of a stirring device (10) which can be disposed in the beverage container (5; 305).

4. Hot beverage preparation device according to claim 2, **characterized in that** the stirring unit (106) comprises a coupling device (141, 142), which is configured for a contactless power transmission between the driving device (140) and a stirring device (150) which can be disposed in the beverage container (5; 305).

5. Hot beverage preparation device according to claim 1, 2, 3 or 4, **characterized in that** a filtering device (144; 262; 486), configured to be liquid permeable at least in sections, is disposed in the beverage container (5; 305; 405) and is configured such that it has a restraining function for the beverage substrate and facilitates a distribution of the flavouring agents of the beverage substrate in the heated liquid.

6. Hot beverage preparation device according to claim 5, **characterized in that** the stirring device (230; 410) is configured as the receptor for the filtering device (262) realized to be removable.

7. Hot beverage preparation device according to claim 5, **characterized in that** the filtering device (144) is integrated in the stirring device (150; 410).

8. Hot beverage preparation device according to claim 6 or 7, **characterized in that** a filling opening (147) of the filtering device (144) for feeding the beverage substrate is disposed above a predeterminable maximum liquid level of the beverage container (5; 305), particularly in order to facilitate the feeding of the beverage substrate during the process of beverage preparation.

9. Hot beverage preparation device according to one of the preceding claims, **characterized in that** the control device (4) is arranged to control the operation of the stirring unit (6; 106; 406) dependent from the feeding and/or the temperature of the liquid.

10. Hot beverage preparation device according to one of the preceding claims, **characterized in that** a supply means (22, 22) for a further liquid, in particular milk, includes a storage container and/or a conveying means and/or a dosage valve and is arranged for a liquid supply to the beverage container (5; 305; 405).

11. Hot beverage preparation device according to one of the preceding claims, **characterized in that** the liquid level sensor is coupled with the control device (4) to control a fluid supply to the and/or from the beverage container (5; 305; 405).

12. Hot beverage preparation device according to claim 11, **characterized in that**, that two liquid level sensors (423, 484) linearly spaced apart from each other along the axis of rotation (34) and/or a temperature sensor (485) are provided, in particular on the stirring unit (406) and/or in the beverage container (405).

13. Hot beverage preparation device according to one of the preceding claims, **characterized in that** a product container (371) is provided for the prepared beverage and that a connection line (370) is configured between the beverage container (305) and the product container (371) for feeding the beverage from the beverage container (305) to the product container (371), wherein the connection line is associated with a valve coupled to the control device (4) and/or a conveying means coupled to the control device.

14. Hot beverage preparation device according to one of the preceding claims, **characterized in that** the control device (4) is configured such that it can perform a sequence of successive heating- and cooling cycles with predeterminable cycle duration and/or predeterminable target temperatures for a heating cycle and a cooling cycle by means of the heating device (3; 403) or the heating device (3; 403) and the stirring device (6; 406).

## Revendications

1. Dispositif de préparation de boissons chaudes à usage domestique ou gastronomique, comprenant un dispositif de chauffage (3 ; 403) pour le liquide, un dispositif de commande (4) servant à commander le dispositif de chauffage (3 ; 403) et un récipient de boisson (5 ; 305 ; 405), qui est réalisé pour recevoir du liquide chauffé, sachant qu'un dispositif agitateur (6 ; 106 ; 406) est disposé dans le récipient de boisson (5 ; 305 ; 405), lequel dispositif agitateur est réalisé en vue d'agiter le liquide chauffé afin de permettre une répartition homogène d'un substrat de boisson pouvant être introduit dans le liquide chauffé, sachant que le dispositif agitateur (6 ; 106 ; 406) comprend un dispositif de filtrage (206 ; 486) en vue de recevoir le substrat de boisson, **caractérisé en ce qu'**un capteur de niveau de remplissage (23 ; 423, 484) est prévu en vue de surveiller le niveau de remplissage du récipient de boisson (5 ; 305 ; 405) et est relié au dispositif de commande (4) afin de commander un apport de chaleur dans le récipient de boisson (5 ; 305 ; 405) et/ou de commander une vitesse d'agitation du dispositif agitateur (6 ; 106 ; 406), et sachant que le dispositif de commande (4) est mis au point de telle manière que le chauffage du liquide dans le récipient de boisson (5 ; 305 ; 405) est effectué à l'aide du profil de température pouvant être prédéfini, et/ou **en ce que** le fonctionnement du dispositif agitateur (6 ; 106 ; 406) a lieu en fonction d'un niveau de remplissage du liquide.

2. Dispositif de préparation de boissons chaudes selon la revendication 1, **caractérisé en ce que** le dispositif agitateur (6 ; 106 ; 406) comprend un dispositif d'entraînement (24 ; 140) disposé à l'extérieur du récipient de boisson (5 ; 305 ; 405) et couplé au dispositif de commande (4).

3. Dispositif de préparation de boissons chaudes selon la revendication 2, **caractérisé en ce que** le dispositif agitateur (6 ; 106) comprend une section de tige (20, 30) télescopique reliée au dispositif d'entraînement (24), laquelle section de tige est réalisée en vue d'ajuster en hauteur un moyen agitateur (10) pouvant être disposé dans le récipient de boisson (5 ; 305).

4. Dispositif de préparation de boissons chaudes selon la revendication 2, **caractérisé en ce que** le dispositif agitateur (106) comprend un dispositif de couplage (141, 142), qui est réalisé en vue de transmettre une force sans contact entre le dispositif d'entraînement (140) et un moyen agitateur (150) pouvant être disposé dans le récipient de boisson (5 ; 305).

5. Dispositif de préparation de boissons chaudes selon la revendication 1, 2, 3, ou 4, **caractérisé en ce qu'**est disposé dans le récipient de boisson (5 ; 305 ; 405), un dispositif de filtrage (144 ; 262 ; 486), qui est réalisé de manière perméable au liquide au moins par endroits et qui est réalisé de telle manière qu'il présente une fonction de retenue pour le substrat de boisson et permet une répartition des substances aromatiques du substrat de boisson dans le liquide chauffé.

6. Dispositif de préparation de boissons chaudes selon la revendication 5, **caractérisé en ce que** le moyen agitateur (230; 410) est réalisé sous la forme d'un système de réception destiné au dispositif de filtrage (262) réalisé de manière à pouvoir être retiré.

7. Dispositif de préparation de boissons chaudes selon la revendication 5, **caractérisé en ce que** le dispositif de filtrage (144) est intégré dans le moyen agitateur (150 ; 410).

8. Dispositif de préparation de boissons chaudes selon la revendication 6 ou 7, **caractérisé en ce qu'**une ouverture de remplissage (147) du dispositif de filtrage (144) en vue d'acheminer du substrat de boisson est disposée au-dessus d'un niveau de liquide maximal pouvant être prédéfini du récipient de boisson (5 ; 305), en particulier pour permettre l'amenée du substrat de boisson au cours de l'opération de préparation de boissons.

9. Dispositif de préparation de boissons chaudes selon l'une quelconque des revendications précédentes, **caractérisé en ce que** le dispositif de commande (4) est mis au point de telle manière que le fonctionnement du dispositif agitateur (6 ; 106 ; 406) a lieu en fonction de l'amenée et/ou de la température du liquide.

10. Dispositif de préparation de boissons chaudes selon l'une quelconque des revendications précédentes, **caractérisé en ce qu'**un dispositif d'amenée (21, 22) destiné à un autre liquide, en particulier à du lait, comprend un récipient réservoir et/ou un moyen de transport et/ou une soupape de dosage et est réalisé en vue d'amener du liquide dans le récipient de boisson (5 ; 305 ; 405).

11. Dispositif de préparation de boissons chaudes selon l'une quelconque des revendications précédentes, **caractérisé en ce que** le capteur de niveau de remplissage est relié au dispositif de commande (4) afin de commander une amenée de liquide et/ou une évacuation de liquide dans le récipient de boisson (5 ; 305 ; 405).

12. Dispositif de préparation de boissons chaudes selon la revendication 11, **caractérisé en ce que** deux capteurs de niveau de remplissage (423, 484) espacés l'un de l'autre de manière linéaire le long d'un axe de rotation (34) et/ou un capteur de température (485) sont prévus en particulier au niveau du dispositif agitateur (406) et/ou dans le récipient de boisson (406).

13. Dispositif de préparation de boissons chaudes selon l'une quelconque des revendications précédentes, **caractérisé en ce qu'**un récipient de produit (371) destiné à la boisson obtenue est prévu, et **en ce qu'**une conduite de liaison (370) en vue d'amener la boisson hors du récipient de boisson (305) dans le récipient de produit (371) est réalisée entre le récipient de boisson (305) et le récipient de produit (371), sachant qu'une soupape d'arrêt couplée au dispositif de commande (4) et/ou un dispositif de transport couplé au dispositif de commande sont associés à la conduite de liaison.

14. Dispositif de préparation de boissons chaudes selon l'une quelconque des revendications précédentes, **caractérisé en ce que** le dispositif de commande (4) est réalisé de telle manière qu'il peut mettre en oeuvre une succession de cycles de chauffage et de cycles de refroidissement se suivant les uns les autres à une durée de cycle prédéfinie et/ou à des températures cibles pouvant être prédéfinies pour un cycle de chauffage et un cycle de refroidissement à l'aide du dispositif de chauffage (3 ; 403) ou du dispositif de chauffage (3 ; 403) et du dispositif agitateur (6 ; 406).
